# EUROPÄISCHE PATENTSCHRIFT

(11) **EP 3 237 658 B1**
(45) Veröffentlichungstag und Bekanntmachung des Hinweises auf die Patenterteilung: **18.08.2021**
(21) Anmeldenummer: 15817831.9
(22) Anmeldetag: 21.12.2015
(51) Int. Cl.: D01H 4/08

(54) **ROTORSPINNMASCHINE MIT EINER VIELZAHL VON ARBEITSSTELLEN UND EINER ABSAUGEINRICHTUNG**
ROTOR SPINNING MACHINE COMPRISING A PLURALITY OF WORKING POSITIONS AND A SUCTION DEVICE
MÉTIER À FILER À ROTOR COMPORTANT UNE PLURALITÉ D'EMPLACEMENTS DE TRAVAIL ET UN DISPOSITIF D'ASPIRATION

(30) Priorität: 22.12.2014 DE 102014119380
(43) Veröffentlichungstag der Anmeldung: 01.11.2017
(73) Patentinhaber: Rieter Ingolstadt GmbH, 85055 Ingolstadt (DE)
(72) Erfinder: POHN, Romeo, 85290 Geisenfeld/Rottenegg (DE); STEPHAN, Adalbert, 92339 Beilngries/Paulushofen (DE); SCHÄFFLER, Gernot, 73116 Wäschenbeuren (DE); MACKO, Milan, 560 02 Ceska Trebova (CZ)
(74) Vertreter: Canzler & Bergmeier Patentanwälte Partnerschaft mbB
(86) Internationale Anmeldenummer: PCT/EP2015/080780
(87) Internationale Veröffentlichungsnummer: WO 2016/102456

(56) Entgegenhaltungen:
- EP-A1- 0 634 506
- EP-A2- 0 717 132
- EP-A2- 2 692 916
- WO-A1-2008/058606
- DE-A1- 4 219 701
- DE-A1- 19 612 707
- DE-A1-102007 053 467
- FR-A- 1 198 101
- GB-A- 1 342 658

## Beschreibung

Die vorliegende Erfindung betrifft eine Rotorspinnmaschine mit einer Vielzahl von in Längsrichtung der Rotorspinnmaschine auf wenigstens einer Längsseite zwischen zwei stirnseitigen Enden der Rotorspinnmaschine nebeneinander angeordneten Arbeitsstellen, welche jeweils mehrere Arbeitsorgane zur Herstellung und Aufspulung eines Garns aufweisen, wobei die Arbeitsorgane zumindest eine Speisevorrichtung, eine Auflösevorrichtung, einen Spinnrotor sowie eine Spulvorrichtung umfassen, und mit einer Absaugeinrichtung zum Erzeugen eines Spinnunterdrucks an den Arbeitsstellen.

Im Stand der Technik bei Rotorspinnmaschinen ist es seit langem üblich, sämtliche Arbeitsorgane der Arbeitsstellen zentral anzutreiben, um die Maschinen wirtschaftlich betreiben zu können. Eine derartige Rotorspinnmaschine ist beispielsweise aus der EP 0 717 132 A2 bekannt.

Der Antrieb jeweils gleichartiger Arbeitsorgane erfolgt dabei durch einen an einem Ende der Rotorspinnmaschine angeordneten zentralen Antrieb, der über eine maschinenlange Welle oder einen Tangentialriemen die Arbeitsorgane sämtlicher Arbeitsstellen antreibt. Eine Einrichtung zur Erzeugung des für die Garnherstellung erforderlichen Spinnunterdrucks ist dabei zentral in einem Gestell an einem Ende der Rotorspinnmaschine angeordnet. Der Spinnunterdruck wird von dort über einen maschinenlangen Unterdruckkanal an sämtliche Arbeitsstellen verteilt. Dabei sind üblicherweise die zentralen Antriebe für die Arbeitsorgane in einem ersten Endgestell der Rotorspinnmaschine und die Einrichtung zur Erzeugung des Spinnunterdrucks in einem zweiten Gestell am gegenüberliegenden Ende der Rotorspinnmaschine untergebracht.

Auch aus der DE 42 19 701 A1 ist eine solche Maschine bekannt. Die Maschine weist weiterhin einen maschinenlangen Unterdruckkanal auf, der die Spinnstellen mit Spinnunterdruck versorgt. Die Spinnrotoren werden dort über einen maschinenlangen Antriebsriemen angetrieben und sind in Stützscheiben gelagert. Als Alternative kann jedoch auch ein Einzelantrieb für die Spinnrotoren vorgesehen sein.

Die EP 2 692 916 A2 beschreibt in ähnlicher Weise eine Rotorspinnmaschine, bei der die Spinnrotoren mittels eines elektrischen Einzelantriebs angetrieben sind. Die Spinnrotoren sind in einer Magnetlagerung gelagert.

Auch bei der WO 2008/058606 A1 sind die Spinnrotoren einzeln angetrieben und in einer Magnetlagerung gelagert. Die Auflösewalzen und die Speisewalzen sind hier ebenfalls mittels maschinenlangen Antriebselementen angetrieben, können jedoch nach einer alternativen Ausführung auch einzeln angetrieben sein.

Aus der GB 1 342 658 A ist weiterhin eine Rotorspinnmaschine bekannt, bei der die einzelnen Arbeitsorgane alle mittels jeweils eines eigenen Einzelantriebs angetrieben sind. Zur Unterdruckversorgung ist dort nichts gesagt.

Die DE 10 2007 053 467 A1 beschreibt eine Spinnmaschine mit einer Hauptunterdruckquelle und einer bei Bedarf zuschaltbaren Unterdruckquelle. Diese kann beispielsweise zugeschaltet werden, wenn an mehreren Arbeitsstellen gleichzeitig die Saugdüsen geöffnet werden.

Um den Anforderungen nach einer Produktivitätssteigerung nachzukommen, wurde es erforderlich, die Anzahl der Arbeitsstellen an einer Rotorspinnmaschine zu erhöhen. Aufgrund von Problemen durch Längendehnung und Torsion stößt das beschriebene Maschinenkonzept mit von einen Maschinenende aus zentral angetriebenen Arbeitsorganen jedoch an seine Grenzen. Selbiges gilt für die Versorgung der Arbeitsstellen mit Spinnunterdruck.

Es wurden daher bereits verschiedene Maschinenkonzepte vorgeschlagen, welche eine Erhöhung der Anzahl der Arbeitsstellen je Spinnmaschine erlauben.

Die DE 10 2004 016 796 B4 schlägt daher vor, eine Rotorspinnmaschine in zwei Abschnitte zu gliedern und Zentralantriebe nicht nur in einem endseitigen Gestell, sondern auch in einem zwischen den beiden Abschnitten angeordneten Zwischengestell anzuordnen. Die Arbeitsorgane des ersten Abschnitts werden dabei durch einen in dem endseitigen Gestell angeordneten Zentralantrieb und die Arbeitsorgane des zweiten Abschnitts durch einen in dem Zwischengestell angeordneten Zentralantrieb angetrieben. Weiterhin sollen die beiden Abschnitte der Rotorspinnmaschine über zwei separate Leitungen getrennt voneinander mit Unterdruck versorgt werden. Die hierfür erforderliche Unterdruckquelle kann dabei in einem der endseitigen Gestelle oder in dem Zwischengestell angeordnet werden.

Auch die DE 10 2006 029 056 A1 beschreibt eine Rotorspinnmaschine mit einem zwischen den Arbeitsstellen angeordneten Zwischengestell. Dabei soll zumindest der zentrale Antrieb für die Fadenchangiereinrichtungen sowie die Einrichtung zur Erzeugung des Spinnunterdrucks in dem Zwischengestell angeordnet sein. Hierdurch wird sowohl die erforderliche Länge der Fadenführerstangen als auch die erforderliche Länge der Unterdruckkanäle zur Verteilung des Spinnunterdrucks auf die Arbeitsstellen reduziert, da diese sich jeweils nur noch von dem Zwischengestell bis zu einem der beiden Maschinenenden erstrecken müssen.

Mittels eines derartigen Zwischengestells ist es möglich, die Länge zentraler Einrichtungen zu reduzieren und dadurch die technischen Probleme durch Längendehnung und Torsion bei langen Maschinen zu reduzieren. Die Zugänglichkeit zu den in dem Zwischengestell angeordneten Komponenten sowie die Ver- und Entsorgung an der Maschine kann durch diese Anordnung jedoch erschwert sein. Es ist jedoch neben der Beherrschung der technischen Probleme bei langen Maschinen ebenso erforderlich, diese auch wirtschaftlich und energiesparend betreiben zu können.

Die DE 196 12 707 A1 beschreibt eine Spinnmaschine mit einer Vielzahl von Spindeln. Die Maschine weist weiterhin einen Absaugkanal auf, der in zwei Abschnitte unterteilt sein kann. Die beiden Abschnitte können jeweils durch eine separate Ventilatoranordnung besaugt werden.

Aufgabe der vorliegenden Erfindung ist es, eine Rotorspinnmaschine vorzuschlagen, welche die Anordnung einer besonders hohen Anzahl von Arbeitsstellen an der Spinnmaschine erlaubt und zugleich einen wirtschaftlichen Betrieb der Maschine ermöglicht.

Die Aufgabe wird gelöst mit den Merkmalen des Anspruchs 1.

Eine Rotorspinnmaschine weist eine Vielzahl von in Längsrichtung der Rotorspinnmaschine zwischen zwei stirnseitigen Enden auf wenigstens einer Längsseite der Rotorspinnmaschine nebeneinander angeordneter Arbeitsstellen auf. Die Arbeitsstellen weisen jeweils mehrere Arbeitsorgane zur Herstellung und Aufspulung eines Garns auf, wobei diese zumindest eine Speisevorrichtung, eine Auflösevorrichtung, einen Spinnrotor sowie eine Spulvorrichtung umfassen. Weiterhin weist die Rotorspinnmaschine eine Absaugeinrichtung zum Erzeugen eines Spinnunterdrucks an den Arbeitsstellen auf. Es ist vorgesehen, dass die Absaugeinrichtung wenigstens zwei separate Unterdruckquellen beinhaltet, wobei an jedem der beiden stirnseitigen Enden der Rotorspinnmaschine jeweils wenigstens eine Unterdruckquelle angeordnet ist, und wobei jede der beiden Unterdruckquellen an einen separaten, sich in Längsrichtung der Rotorspinnmaschine nur über einen Teil der Arbeitsstellen erstreckenden Unterdruckkanal angeschlossen ist. Weiterhin weist jede Arbeitsstelle einen Einzelantrieb, insbesondere einen elektrischen Einzelantrieb, für den Spinnrotor auf. Ebenso sind die Auflösevorrichtungen und die Spulvorrichtungen der Arbeitsstellen jeweils mittels eines elektrischen Einzelantriebs angetrieben.

Dadurch, dass an beiden Enden der Rotorspinnmaschine eine Unterdruckquelle vorgesehen ist, welche nur jeweils einen Teil der Arbeitsstellen versorgen muss, können die über die Länge des Unterdruckkanals entstehenden Druckverluste deutlich reduziert werden. Es ist dadurch möglich, Unterdruckquellen mit einer geringeren Absaugleistung einzusetzen, wobei auch die Gesamtleistung der beiden Unterdruckquellen niedriger ausfallen kann als sie es im Falle einer einzigen Unterdruckquelle mit einem durchgehenden Unterdruckkanal wäre.

Ebenso werden durch die Einzelantriebe für die Spinnrotoren Verluste durch die Walkarbeit in einem maschinenlangen Tangentialriemen, wie er bei herkömmlichen, zentral angetriebenen Spinnrotoren zum Einsatz kam, vermieden. Aufgrund der hohen Drehzahlen der Spinnrotoren und der hohen Leistung, die im Falle eines Zentralantriebs durch den Riemen zu übertragen wäre, sind diese Verluste umso größer, je mehr Arbeitsstellen die Maschine aufweist. Es ist daher bei sehr vielen Arbeitsstellen, beispielsweise bei über 500 Arbeitsstellen, mittels einzeln angetriebener Spinnrotoren trotz des an sich höheren Aufwands eines Einzelantriebs eine deutliche Energieersparnis möglich.

Die Kombination aus einzeln angetriebenen Spinnrotoren mit einer unterteilten Unterdruckversorgung mit einer Unterdruckquelle an jedem Ende der Maschine ermöglicht somit aufgrund der optimalen Anordnung und Antriebsform dieser beiden für den Energieverbrauch wesentlichen Komponenten einen besonders energiesparenden und kostengünstigen Betrieb. Die Zugänglichkeit zu den Unterdruckquellen bzw. zu deren Filterboxen, in welchen abgesaugte Verunreinigungen und Abfälle von den Arbeitsstellen zurückgehalten werden, ist aufgrund der Anordnung an den stirnseitigen Enden der Rotorspinnmaschine nicht beeinträchtigt. Es ist daher auch die Wartung sowie die Ver- und Entsorgung beispielsweise durch Bedienpersonal erleichtert, was weiterhin zum wirtschaftlichen Betrieb der Maschine beiträgt. Nach einer vorteilhaften Weiterbildung weist die Arbeitsstelle weiterhin eine berührungslose Lagerung, insbesondere eine Magnetlagerung, für den Spinnrotor auf. Der energie- und kostensparende Betrieb der Rotorspinnmaschine wird hierdurch weiter unterstützt, da keine Verluste mehr durch Walkarbeit, wie sie in herkömmlichen Stützscheibenlagerungen auftreten, vorhanden sind.

Ebenfalls vorteilhaft ist es, wenn die Unterdruckquellen jeweils in einem an den stirnseitigen Enden der Rotorspinnmaschine angeordneten Gestell angeordnet sind. Es ist hierdurch möglich, zentrale Antriebe der Rotorspinnmaschine und die Unterdruckquelle in einem gemeinsamen Gestell unterzubringen. Ebenso ist es jedoch denkbar, die Unterdruckquellen jeweils in einem separaten Gehäuse oder Gestell anzuordnen.

Weiterhin ist es vorteilhaft, wenn die Unterdruckquellen jeweils einen Ventilator und einen Antrieb für den Ventilator aufweisen. Die Antriebe der Unterdruckquellen sind dabei vorzugsweise durch eine zentrale Steuerungseinrichtung der Rotorspinnmaschine ansteuerbar. Es kann sich dabei um wenigstens zwei gleichartige Antriebe und Ventilatoren handeln. Sofern in den wenigstens zwei Unterdruckkanälen ein unterschiedliches Unterdruckniveau benötigt wird, beispielsweise bei verschiedenen Spinnanwendungen, oder die Unterdruckkanäle unterschiedlich lang sind, können jedoch auch verschiedene Ventilatoren und Antriebe eingesetzt werden. Vorteilhaft ist es dabei auch, dass den Ventilatoren jeweils ein eigener Filterkasten zugeordnet ist und somit eine Entsorgung der darin gesammelten Abfälle an beiden Enden der Maschine erfolgen kann.

Weiterhin ist es für einen energiesparenden Betrieb der Rotorspinnmaschine vorteilhaft, wenn an jeden der wenigstens zwei Unterdruckkanäle wenigstens 20 %, vorzugsweise wenigstens 30 %, besonders bevorzugt wenigstens 40% der in Längsrichtung der Rotorspinnmaschine auf wenigstens einer Längsseite nebeneinander angeordneten Arbeitsstellen angeschlossen ist. Es wird hierdurch sichergestellt, dass die Druckverluste in den Unterdruckkanälen in geringen Grenzen gehalten werden.

Vorteilhaft ist es auch, wenn die beiden Unterdruckkanäle gleich lang ausgebildet sind und/oder jeweils die gleiche Anzahl von Arbeitsstellen an die beiden Unterdruckkanäle angeschlossen ist. Gegenüber einem einzigen, maschinenlangen Unterdruckkanals können die Unterdruckkanäle auf etwa die Hälfte der bisherigen Länge reduziert werden, wodurch die Druckverluste in optimaler Weise reduziert werden können.

Nach einer konstruktiv vorteilhaften und platzsparenden Ausführung der Rotorspinnmaschine ist es vorgesehen, dass die wenigstens zwei Unterdrucckanäle in Längsrichtung der Rotorspinnmaschine fluchtend hintereinander angeordnet sind. Es ist hierdurch auch möglich, den bisherigen Maschinenaufbau mit einem einzigen, durchgehenden Unterdruckkanal zu übernehmen und lediglich eine Trennwand oder eine Blende zur flexiblen Unterteilung einzusetzen, um die beiden separaten Unterdruckkanäle auszubilden. Alternativ ist es aber auch denkbar, dass die beiden Unterdruckkanäle bezogen auf die Längsrichtung der Rotorspinnmaschine zumindest teilweise parallel zueinander verlaufen. Dies ermöglicht es, einzelne Arbeitsstellen je nach Bedarf an den einen oder den anderen Unterdruckkanal anzuschließen und dadurch die Unterdruckversorgung flexibel auszugestalten.

Ebenso ist es vorteilhaft, wenn im Betrieb der Rotorspinnmaschine in jedem der Unterdruckkanäle an einem der Unterdruckquelle gegenüberliegenden Ende des jeweiligen Unterdruckkanals noch einem Unterdruck von wenigstens 60 mbar erreicht wird. Die Versorgung der Arbeitsstellen mit einem weitgehend gleichmäßigen Unterdruckniveau kann hierdurch gewährleistet werden.

Weiterhin ist es vorteilhaft, wenn jede Arbeitsstelle einen Einzelantrieb, insbesondere einen elektrischen Einzelantrieb für die Speisevorrichtung aufweist. Es ist hierdurch in besonders vorteilhafter Weise möglich, die Einspeisemenge der Fasen an die jeweils an der Arbeitsstelle vorherrschenden Verhältnisse anzupassen. Insbesondere beim Anspinnen und Produzieren bestimmter Effektgarne lassen sich mit individuell antreibbaren Speisevorrichtungen Vorteile erzielen.

Sind bei der Rotorspinnmaschine auf beiden Längsseiten zwischen den stirnseitigen Enden Arbeitsstellen angeordnet, so kann es vorteilhaft sein, wenn jeder der beiden Längsseiten ebenfalls separat mit Unterdruck versorgt wird. Es sind somit an jedem der beiden Enden jeweils zwei Unterdruckquellen vorgesehen, die an jeweils einen separaten Unterdruckkanal angeschlossen sind, der sich wiederum nur über einen Teil der in Längsrichtung nebeneinander angeordneten Arbeitsstellen erstreckt.

Nach einer ersten vorteilhaften Weiterbildung der Erfindung ist weiterhin vorgesehen, dass die weiteren Arbeitsorgane der Arbeitsstellen mittels eines Einzelantriebs angetrieben sind. Die Spinnmaschine ist hierdurch besonders flexibel und ermöglicht die Herstellung unterschiedlicher Produkte ebenso wie einen fliegenden Partiewechsel. Insbesondere wenn die Arbeitsstellen zusätzlich über eigene Fadenhandlingsorgane verfügen, können zudem lange Wartezeiten zur Wartung oder Behebung von Fadenbrüchen vermieden werden, was wiederum eine Steigerung der Produktivität ermöglicht.

Nach einer anderen Weiterbildung der Erfindung sind hingegen die weiteren Arbeitsorgane einer Längsseite jeweils mittels Zentralantrieben angetrieben. Da diese im Vergleich zu den Spinnrotoren mit geringeren Drehzahlen umlaufen, sind die Verluste auch bei längeren Maschinen mit einer besonders hohen Anzahl von Spinnstellen, beispielsweise von mehr als 500 Spinnstellen, noch in einem Bereich, in welchem sich ein Zentralantrieb als wirtschaftlich erweist.

Weiterhin ist es vorteilhaft, wenn gleichartige, zentral angetriebene Arbeitsorgane einer Längsseite jeweils wenigstens zwei Gruppen bilden, wobei in jedem der beiden Gestelle an den stirnseitigen Enden ein eigener Zentralantrieb zum Antrieb einer der beiden Gruppen angeordnet ist. Es kann hierdurch wiederum eine Verkürzung der üblicherweise maschinenlangen Antriebsmittel auf bis zu der Hälfte der sonst erforderlichen Länge erreicht werden. Dadurch können nicht nur Probleme durch Torsion und Längendehnung vermindert werden, sondern auch die Verluste durch Walkarbeit in den Riemen reduziert werden. Die wenigstens zwei Gruppen je Längsseite der Rotorspinnmaschine können dabei jeweils die gleiche Anzahl von Arbeitsstellen oder auch unterschiedliche Anzahlen umfassen. Vorteilhaft ist es, wenn wiederum wenigstens 20 % aller Arbeitsstellen einer Längsseite jeweils einem Zentralantrieb zugeordnet sind.

Vorteilhaft ist es auch, wenn die Rotorspinnmaschine wenigstens zwei in Längsrichtung der Rotorspinnmaschine hintereinander angeordnete Spulentransportbänder aufweist. Auch an diesen entstehen hohe Verluste, die sich durch den Einsatz zweier kürzerer Bänder mit jeweils kleineren Antrieben anstellen eines einzigen Bandes mit einem großen Antrieb reduzieren lassen.

Ebenso ist es vorteilhaft, wenn die Rotorspinnmaschine einen Zwischenspeicher für Leerhülsen aufweist, um die Lieferwege und damit auch die Bandlaufzeiten zur Versorgung mit Leerhülsen zu verkürzen.

Nach einer anderen Weiterbildung der Erfindung kann es vorteilhaft sein, wenn die Rotorspinnmaschine zwischen den beiden endseitigen Gestellen ein Zwischengestell aufweist. In diesem können Umlenkrollen zentraler Antriebe und/oder Antriebe und/oder Speichereinheiten für zentrale Ver- und Entsorgungseinrichtungen angeordnet sein.

Die Versorgung mit Leehülsen kann weiterhin erleichtert und die Lieferzeiten für Leerhülsen können verkürzt werden, wenn die Rotorspinnmaschine an jedem ihrer stirnseitigen Enden einen zentralen Hülsenspeicher für Leerhülsen aufweist. Vorzugsweise sind diese beabstandet von den beiden Gestellen angeordnet, um die Zugänglichkeit der Gestelle zu gewähren.

Weiterhin ist es vorteilhaft, wenn die Rotorspinnmaschine an jedem ihrer beiden stirnseitigen Enden einen Anschluss zur Energieeinspeisung, insbesondere für eine Spannungsversorgung für die elektrischen Komponenten und/oder für eine Druckluftversorgung, aufweist.

Ebenso ist es vorteilhaft, wenn die Rotorspinnmaschine an jedem ihrer beiden stirnseitigen Enden einen Abluftaustritt der Absaugeinrichtung aufweist. Ebenso kann eine Schutzabfuhr an beiden Enden der Maschine vorgesehen sein.

Weitere Vorteile der Erfindung werden anhand der nachfolgend dargestellten Ausführungsbeispiele beschrieben. Es zeigen:
- **Figur 1**: eine Rotorspinnmaschine über in einer schematischen Über-sichtsdarstellung gemäß einer ersten Ausführung,
- **Figur 2**: eine Arbeitsstelle einer Rotorspinnmaschine in einer schematischen Schnittdarstellung,
- **Figur 3**: eine Rotorspinnmaschine in einer schematischen Übersichts-darstellung in einer alternativen Ausführung und
- **Figur 4**: eine schematische Darstellung einer Rotorspinnmaschine mit einer zentralen Versorgungseinrichtung für Leerhülsen.

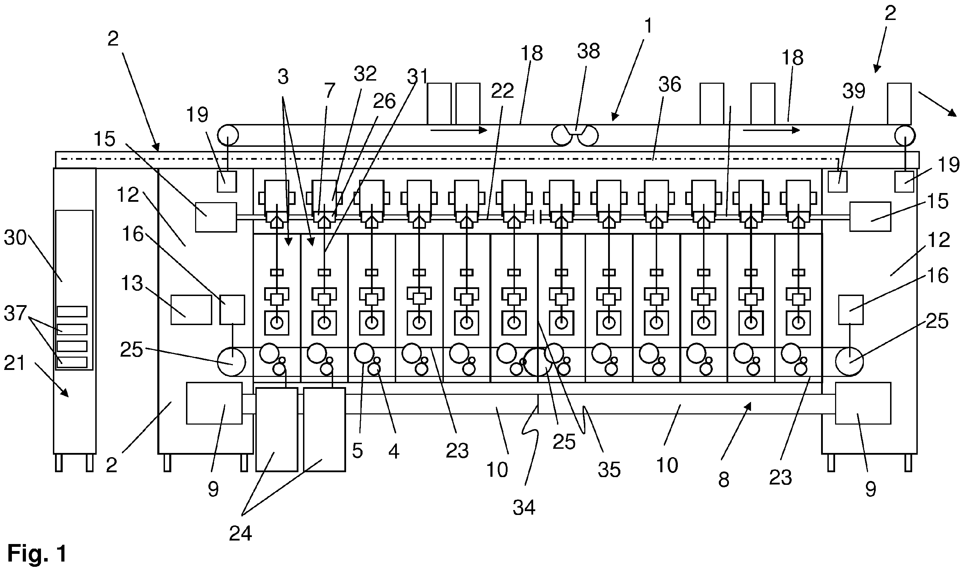

Figur 1 zeigt eine schematische Darstellung einer Rotorspinnmaschine 1, welche in besonderer Weise für die Anordnung einer Vielzahl von Arbeitsstellen 3 in Längsrichtung der Rotorspinnmaschine 1 nebeneinander geeignet ist. Die Rotorspinnmaschine 1 weist eine Vielzahl von zwischen zwei stirnseitigen Enden 2 nebeneinander angeordneten Arbeitsstellen 3 auf, welche jeweils in an sich bekannter Weise mehrere Arbeitsorgane 4, 5, 6, 7 zur Herstellung und Aufspulung eines Garns 31 aufweisen. Jede Arbeitsstelle 3 weist eine Speisevorrichtung 4 auf, mittels welcher Fasermaterial aus einem Vorratsbehälter 24 einer Auflösevorrichtung 5 zugeführt wird. Diese speist das in Einzelfasern aufgelöste Fasermaterial einem Spinnrotor 6 zu, in welchem es zu Garn 31 versponnen wird und schließlich mittels einer Spulvorrichtung 7 auf eine Spule 32 aufgespult wird.

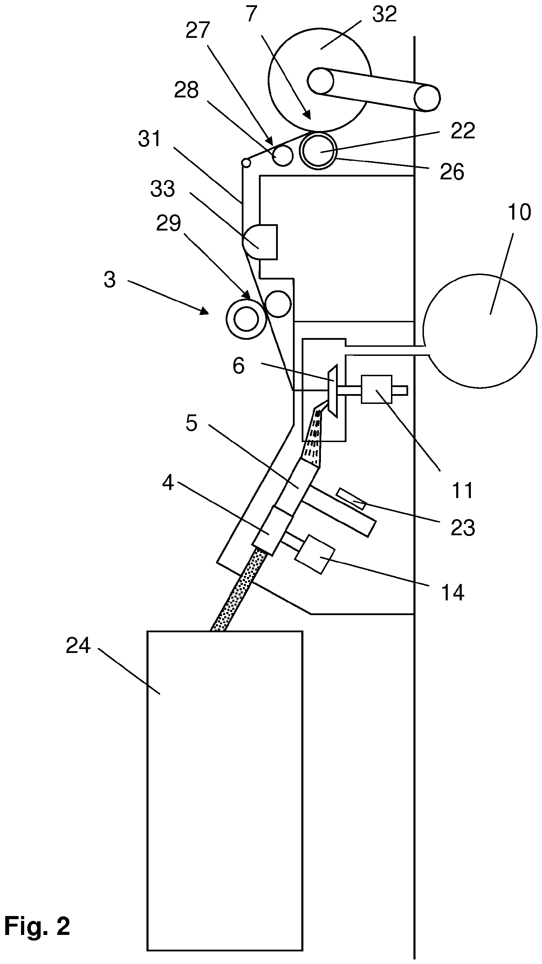

Die Arbeitsorgane 4, 5, 6, 7 sind genauer in einer schematischen Schnittdarstellung einer Arbeitsstelle 3 in Fig. 2 gezeigt. Gemäß Fig. 2 sind weiterhin eine Abzugsvorrichtung 29, eine Paraffiniereinrichtung 33 sowie eine Changiervorrichtung 27 mit einer Fadenführerstange 28 erkennbar. Weiterhin ist ein Unterdruckkanal 10 dargestellt, welcher der Versorgung der Arbeitsstellen 3 mit Spinnunterdruck dient und weiterhin zum Abführen von Verunreinigungen und Abfällen von den Arbeitsstellen 3, welche beim Anspinnen sowie beim Warten der Arbeitsstellen 3 anfallen, vorgesehen ist.

Um den Forderungen des Marktes nach einer Erhöhung der Produktivität von Rotorspinnmaschinen 1 nachzukommen, ist es erforderlich, die Anzahl der Arbeitsstellen 3 je Rotorspinnmaschine 1 zu erhöhen. Dies stellt die herkömmlichen Maschinenkonzepte, bei welchen die Arbeitsorgane 4, 5, 6, 7 einer Arbeitsstelle 3 jeweils zentral von einem endseitigen Gestell 2 aus angetrieben wurden, in Frage. Daneben bestehen erhebliche Anforderungen, die Betriebskosten für derartige Rotorspinnmaschinen 1 auch bei einer Verlängerung der Maschine in Grenzen zu halten.

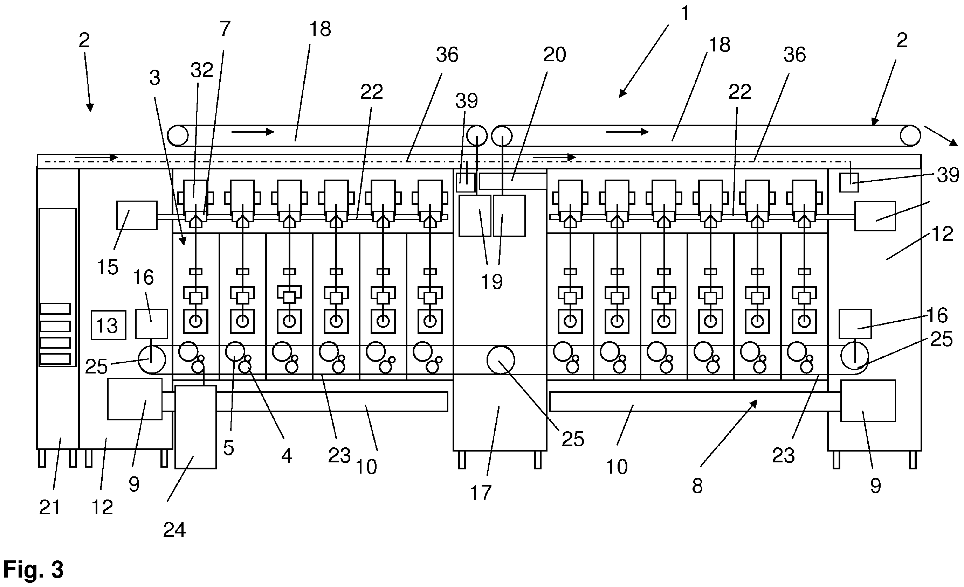

Die vorliegend gezeigte (Fig. 1) Rotorspinnmaschine 1 weist daher zur Unterdruckversorgung eine Absaugeinrichtung 8 mit wenigstens zwei separaten Unterdruckquellen 9 auf, die jeweils an den beiden stirnseitigen Enden 2 der Rotorspinnmaschine 1, vorliegend jeweils in den einseitigen Gestellen 12, angeordnet sind. Jede der Unterdruckquellen 9 ist jeweils an einen separaten Unterdruckkanal 10 angeschlossen. Jeder der separaten Unterdruckkanäle 10 erstreckt sich in Längsrichtung der Rotorspinnmaschine 1 nur über einen Teil der Arbeitsstellen 3. Die Unterdruckkanäle 10 sind vorliegend in Längsrichtung der Rotorspinnmaschine 1 eins fluchtend hintereinander angeordnet, so dass nur ein geringer Bauraum benötigt wird. Besonders vorteilhaft dabei ist es, dass eine Teilung 34 zwischen den beiden Unterdruckkanälen 10 auch flexibel mittels einer versetzbaren Blende in einem durchgehenden Kanal 10 vorgenommen werden kann. In jedem Falle ist jede Arbeitsstelle 3 an zumindest einen der beiden Unterdruckkanäle 10 angeschlossen, wobei andererseits an jeden der Unterdruckkanäle 10 nur jeweils ein Teil der Arbeitsstellen 3 angeschlossen ist. Weiterhin ist in einem der Gestelle 12 eine zentrale Steuerungseinrichtung 13 angeordnet, mittels welcher nicht nur die Antriebe der Unterdruckquelle 9, sondern auch sämtliche anderen Zentralantriebe 15, 16 sowie Bandantriebe 19, 39 (s. Fig. 3) ansteuerbar sind.

Durch eine derartige verteilte Unterdruckversorgung mit wenigstens zwei kürzeren Unterdruckkanälen 10 können die Gesamtverluste bezogen auf die Rotorspinnmaschine 1 gegenüber einer einzigen, zentralen Unterdruckquelle 9 erheblich reduziert werden. Der energiesparende Betrieb der Rotorspinnmaschine 1 wird weiterhin dadurch unterstützt, dass die Spinnrotoren 6 jeder Arbeitsstelle 3 mittels eines Einzelantriebs 11 (siehe Figur 2) angetrieben sind. Aufgrund der hohen Drehzahl der Spinnrotoren 6 wären im Falle eines Zentralantriebs mittels eines Riemens erhebliche Leistungsverluste durch Walkarbeit zu erwarten. In beiden Fällen steigen die Verluste mit zunehmender Länge der Maschine überproportional an, so dass sich das beschriebene Maschinenkonzept mit einzeln angetriebenen Spinnrotoren 6 und einer verteilten Unterdruckversorgung als eine energetisch optimale Kombination erweist. Beispielsweise können an einer Rotorspinnmaschine 1 mit bis zu 600 Arbeitsstellen 3 bis zu 20 % Energieeinsparung gegenüber einem herkömmlichen Konzept mit einer einzigen, zentralen Unterdruckquelle 9 und einem zentralen Rotorantrieb erreicht werden.

Für einen energiesparenden Betrieb der Rotorspinnmaschine 1 ist nach Figur 2 weiterhin vorgesehen, dass der einzeln angetriebene Spinnrotor 6 in einer berührungslosen Lagerung (nicht dargestellt) gelagert ist. Aufgrund der Walkarbeit in den Stützscheiben herkömmlicher Lagerungen lassen sich insbesondere bei sehr vielen Arbeitsstellen 3 je Rotorspinnmaschine 1 erhebliche Energieeinsparungen erzielen.

Für den Antrieb der übrigen Arbeitsorgane, insbesondere der Speisevorrichtung 4, der Auflösevorrichtung 5 sowie der Spulvorrichtung 7, kann es hingegen vorteilhaft sein, diese mittels Zentralantrieben 15,16 anzutreiben. Nach der Darstellung der Figur 2 ist beispielsweise die Auflösevorrichtung 5 jeder Arbeitsstelle 3 mittels eines Tangentialriemens 23 zentral bzw. gruppenweise angetrieben. Ebenso sind die Spulvorrichtungen 7 mittels einer Spulwalzenwelle 22, welche über eine Spulwalze 26 jeweils die Spule 32 antreibt, zumindest gruppenweise zentral angetrieben. In selbiger Weise kann auch eine Speisevorrichtung 4 der Arbeitsstellen 3 zumindest gruppenweise zentral angetrieben sein. Nach Fig. 2 verfügt jedoch die Speisevorrichtung 4 ebenfalls über einen Einzelantrieb 14. Abweichend von den in den Figuren gezeigten Darstellungen ist es jedoch ebenfalls möglich, auch die anderen Arbeitsorgane einer Arbeitsstelle 3 jeweils mittels Einzelantrieben anzutreiben.

Nach den Fig. 1 und 3 sind die übrigen Arbeitsorgane 4, 5, 7 gruppenweise zentral angetrieben. Vorliegend sind die Arbeitsstellen 3 einer Längsseite der Rotorspinnmaschine 1 in zwei Gruppen unterteilt, wobei jeder der beiden Gruppen ein eigener Zentralantrieb 15 für die Spulwalzenwelle 22 sowie ein eigener Zentralantrieb 16 für einen Tangentialriemen 23 der Auflösevorrichtungen 5 zugeordnet ist. Die Zentralantriebe 15, 16 sind dabei ebenfalls in den an den stirnseitigen Enden 2 angeordneten Gestellen 12 untergebracht. Umlenkrollen 25 der Tangentialriemen 23 sind in den endseitigen Gestellen 12 sowie im Bereich der Arbeitsstellen 3 angeordnet. Dabei ist es denkbar, die Teilung 35 der Arbeitsstellen 3 im Bereich der mittigen Umlenkrollen 25 so breit auszuführen, dass diese dort untergebracht werden können. Der Tangentialriemen 23 jedes Zentralantriebs 16 erstreckt sich dabei ebenso wie jede Spulwalzenwelle 22 nur über einen Teil der in Längsrichtung nebeneinander angeordneten Arbeitsstellen 3. In Figur 1 und 3 nicht dargestellt sind die Antriebe der Speisevorrichtungen 4, die ebenfalls gruppenweise mittels Zentralantrieben angetrieben sein können. Auch für die in Fig. 1 und 3 nicht gezeigten Changiervorrichtungen 27 und Abzugsvorrichtungen 29 ist ein derartiger gruppenweiser Zentralantrieb vorteilhaft, während eventuell vorhandene Paraffiniereinrichtungen 33 auch zentral über die ganze Länge der Rotorspinnmaschine 1 angetrieben sein können.

Vorliegend ist nur eine Längsseite einer Rotorspinnmaschine 1 eins gezeigt. Es versteht sich, dass die Rotorspinnmaschine 1 eins auf ihren beiden Längsseiten eine Vielzahl von Arbeitsstellen 3 aufweisen kann. In diesem Falle ist die beschriebene Anordnung der Antriebe 15, 16 in analoger Weise auch auf der gegenüber liegenden Längsseite der Rotorpinnmaschine 1 vorgesehen. Sind wie vorliegend die Arbeitsstellen 3 jeder Längsseite in zwei Gruppen unterteilt, so ergeben sich entsprechend für gleichartige Arbeitsorgane 4, 5, 7 insgesamt jeweils vier Zentralantriebe 15, 16, von denen jeweils zwei an jedem der beiden stirnseitigen Enden angeordnet sind. Dabei kann es auch vorteilhaft sein, die beiden Längsseiten der Rotorspinnmaschine 1 eins jeweils getrennt voneinander mit Unterdruck zu versorgen. In diesem Fall wären also an jedem der beiden stirnseitigen Enden 2 jeweils zwei separate Unterdruckkanäle 10 angeordnet, welche jeweils einer der beiden Längsseiten der Rotorspinnmaschine 1 zugeordnet sind.

Fig. 3 zeigt eine Ausführung einer Rotorspinnmaschine 1 mit einem Zwischengestell 17. Dieses kann vorteilhaft sein, wenn die Rotorspinnmaschine 1 über eine sehr große Anzahl von 600 Arbeitsstellen 3 und mehr verfügt. Die Rotorspinnmaschine 1 entspricht weitgehend der bereits anhand der Figuren 1 und 2 beschriebenen, so dass im Folgenden nur noch auf die Unterschiede zu der Ausführung der Figur 1 eingegangen wird. Das Zwischengestell 17 kann im einfachsten Fall lediglich zur Unterbringung von Umlenkrollen 25 vorgesehen sein, welche im Falle von mittels Tangentialriemen 23 zentralangetriebenen Arbeitsorganen erforderlich sind. Nach der vorliegend gezeigten Ausführung sind jedoch auch die Antriebe 19 von Spulentransportbändern 18 in dem Mittelgestell 17 angeordnet.

Ein weiteres Problem bei der Ausstattung einer Rotorspinnmaschine 1 mit sehr vielen Arbeitsstellen 3 ist weiterhin die Entsorgung der der fertig bewickelten Spulen 32 sowie die Versorgung der Arbeitsstellen 3 mit Leerhülsen 37. Sofern die Entsorgung der Spulen 32 mittels eines Spulentransportbandes 18 erfolgt, treten erhebliche Reibungsverluste an den Leitblechen (nicht dargestellt) der Rotorspinnmaschine 1 auf.

Im Ausführungsbeispiel der Figur 1 sind daher zwei Spulentransportbänder 18 in Längsrichtung hintereinander vorgesehen. Jedes der beiden Spulentransportbänder 18 ist dabei mit einem eigenen Antrieb 19 versehen, der wiederum jeweils an den Enden 2 der Rotorspinnmaschine 1, bevorzugt in den Gestellen 12, angeordnet ist. Die beiden Antriebe 19 können aufgrund dessen, dass die Spulentransportbänder 18 sich wiederum jeweils nur über einen Teil der in Längsrichtung nebeneinander angeordneten Arbeitsstellen 3 erstrecken, wesentlich kleiner ausgeführt sein und können daher verbrauchsgünstig ausgelegt werden. Vorliegend ist eine Ausführung gezeigt, bei welcher beide Spulentransportbänder 18 in der gleichen. Laufrichtung angetrieben werden. Alle Spulen werden somit an nur einem Ende 2 der Rotorspinnmaschine 1 entsorgt.

Die Entnahme der Spulen 32 kann dabei auf verschiedene Weise erfolgen. Beispielsweise kann ein Spulenlift (nicht dargestellt) vorgesehen sein, mittels welchem eine oder mehrere Spulen von dem Transportband 18 auf eine bequeme Entnahmehöhe gebracht werden und dort von einem Bediener entnommen werden. Denkbar ist aber auch, dass die Spulen 32 vom Ende der Rotorspinnmaschine 1 kontinuierlich durch eine automatische Entnahmeeinrichtung (nicht dargestellt) entnommen werden und der Weiterverwendung zugeführt werden.

An der Übergabestelle zwischen den beiden Spulentransportbändern 18 ist vorliegend weiterhin eine Übergabeeinrichtung 38, beispielsweise eine Rollenbahn, angeordnet, mittels welcher die Spulen 32 von dem ersten auf das zweite Spulentransportband 18 übertragen werden können.

Zur Versorgung der Arbeitsstellen 3 mit Leerhülsen 37 ist eine zentrale Versorgungseinrichtung 21 vorgesehen. Diese beinhaltet einen zentralen Speicher 30 für Leerhülsen 37 sowie eine Transporteinrichtung, beispielsweise ein Hülsentransportband 37, welches lediglich durch eine gestrichelte Linie dargestellt ist. Dieses verfügt über einen Antrieb 39 in einem der beiden Gestelle 12 und erstreckt sich vorliegend über alle Arbeitsstellen 3 einer Längsseite der Rotorspinnmaschine 1.

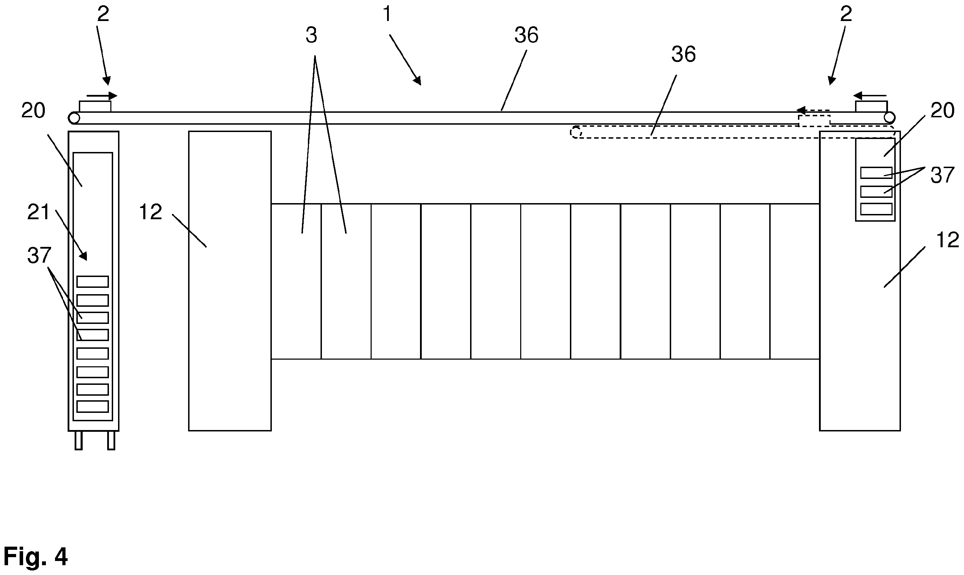

Im Ausführungsbeispiel der Figur 3 sind ebenfalls zwei Spulentransportbänder 18 in Längsrichtung hintereinander vorgesehen. Die Antriebe 19 der Spulentransportbänder 18 sind bei dieser Ausführung vorteilhaft in dem Zwischengestell 17 angeordnet. Dies ermöglicht es, an den Enden 2 bzw. in den Gestellen 12 anstelle der Antriebe 19 der Spulentransportbänder 18 andere Einrichtungen, beispielsweise Zwischenspeicher für Leerhülsen (s. Fig. 4) unterzubringen.

Vorliegend ist im Bereich des Zwischengestells 17 ein Zwischenspeicher 20 vorgesehen, in welchem eine kleinere Anzahl von Leerhülsen 37 bevorratet werden kann. Es ist somit möglich, die von dem zentralen Hülsenspeicher 30 weiter entfernt liegenden Arbeitsstellen 3 aus dem Zwischenspeicher 20 zu versorgen und die nahe dem zentralen Hülsenspeicher 30 gelegenen Arbeitsstellen aus dem zentralen Hülsenspeicher 30. Der Zwischenspeicher 20 verfügt hierzu über eine Entnahmeeinrichtung, um die Leerhülsen 37 wieder auf das Hülsentransportband 36 zu verbringen. Vorteilhaft dabei ist es, dass dennoch nur ein einziges Hülsentransportband 36 erforderlich ist. Mittels dieses Hülsentransportband 36 werden Leerhülsen 37 sowohl aus dem zentralen Hülsenspeicher 30 den einzelnen Arbeitsstellen 3 als auch dem Zwischenspeicher 20 zugestellt. Ist die Rotorspinnmaschine 1 als doppelseitige Maschine ausgeführt, ist es zweckmäßig, je Längsseite der Rotorspinnmaschine 1 ein eigenes Hülsentransportband 36 vorzusehen.

Figur vier zeigt eine andere Ausführung einer Einrichtung 21 zur Hülsenversorgung, bei welcher ein Zwischenspeicher 20 für Leerhülsen 37 im Bereich eines der beiden Gestelle 12 angeordnet ist. Dieser ist mittels des Hülsentransportbands 36 aus dem zentralen Hülsenspeicher 30 mit Leerhülsen 37 beschickbar. Die Versorgung der dem zentralen Hülsenspeicher 30 nahe gelegenen Arbeitsstellen 3 erfolgt in gewohnter Weise aus dem zentralen Hülsenspeicher 30, während zur Versorgung der am gegenüberliegenden Ende 2 angeordneten Arbeitsstellen 3 die Leerhülsen 37 aus den Pufferspeicher 20 in entgegengesetzter Richtung zu den jeweiligen Arbeitsstellen 3 transportiert werden. Das Hülsentransportband 36 ist hierzu in wechselnden Förderrichtungen antreibbar (s. Pfeile). Wie gestrichelt angedeutet, kann natürlich auch ein zweites, über oder neben dem ersten angeordnetes Hülsentransportband 36 vorgesehen sein, um die Leerhülsen 37 aus dem Zwischenspeicher 20 zurück zu dem Arbeitsstellen 3 zu befördern. Die Produktivität der Rotorspinnmaschine 1 kann hierdurch weiter gesteigert werden, da die Wartezeiten auf Leerhülsen 37 erheblich reduziert werden können. Auch hier sind bei einer Ausführung als doppelseitige Maschine bevorzugt auf jeder Längsseite der Rotorspinnmaschine 1 Hülsentransportbänder 36 vorgesehen.

Die Erfindung ist nicht auf die dargestellten Ausführungsbeispiele beschränkt. So ist es abweichend von der in den Figuren 1 und 3 gezeigten Darstellung nicht unbedingt erforderlich, die Arbeitsstellen 3 einer Längsseite der Rotorspinnmaschine 1 in gleichgroße Gruppen zu unterteilen. Ebenso ist es denkbar, eine größere und eine kleinere Gruppe auf jeder Längsseite der Rotorspinnmaschine 1 vorzusehen. Jeder der Gruppen bildet somit eine eigene Produktionsgruppe, welcher eigene Zentralantriebe 15, 16 und eine eigene Unterdruckquelle 9 zugeordnet ist, so dass in jeder der Produktionsgruppen auch unabhängig von den anderen ein unterschiedliches Produkt hergestellt werden kann. Die Flexibilität der Rotorspinnmaschine 1 wird hierdurch gesteigert. In jedem Falle ist jedoch durch die Aufteilung in jeweils zwei Produktionsgruppen auf einer Längsseite der Rotorspinnmaschine 1 durch die jeweils eigene Unterdruckquelle 9 sichergestellt, dass in jedem der Unterdruckkanäle 10 im Betrieb an jeder Stelle noch ein ausreichender Unterdruck erreicht wird. Allerdings bietet die gruppenweise Unterdruckversorgung auch die Möglichkeit, entsprechend des vorgesehenen Produktes bzw. entsprechend der in den jeweiligen Produktionsgruppen vorgesehenen Anwendung das Unterdruckniveau in den Unterdruckkanälen 10 auch unterschiedlich einzustellen. Ist weiterhin an jedem der beiden Enden 2 der Rotorspinnmaschine 1 eine zentrale Versorgungseinrichtung 21 für Leerhülsen 37 mit jeweils wenigstens einem zentralen Hülsenspeicher 30 vorgesehen, können die Produktionsgruppen auch unabhängig voneinander mit Leerhülsen versorgt werden, was die Flexibilität bei Mehrpartienbelegung verbessert und die Wartezeiten auf Leerhülsen 37 weiter reduziert. In diesem Falle ist eine Spulenentsorgung an beiden Enden 2 der Rotorspinnmaschine 1, ggf. auch für jede der beiden Längsseiten getrennt, ebenfalls vorteilhaft.

Weiterhin ist es bezüglich der Spulenentsorgung auch denkbar, die Spulentransportbänder 18 in unterschiedlichen Richtungen anzutreiben und die Entsorgung der Spulen 32 an beiden Enden 2 der Rotorspinnmaschine 1 vorzunehmen. Ebenso können auch zwei Hülsentransportbänder 36 hintereinander je Längsseite der Rotorspinnmaschine 1 angeordnet sein. Sofern ein Zwischengestell 17 vorgesehen ist, können die Antriebe der Hülsentransportbänder 36 natürlich ebenfalls in diesem angeordnet sein.

Weitere Abwandlungen und Kombinationen im Rahmen der Patentansprüche fallen ebenfalls unter die Erfindung.

### Bezugszeichenliste

- 1: Rotorspinnmaschine
- 2: stirnseitiges Ende der Rotorspinnmaschine
- 3: Arbeitsstelle
- 4: Speisevorrichtung
- 5: Auflösevorrichtung
- 6: Spinnrotor
- 7: Spulvorrichtung
- 8: Absaugeinrichtung
- 9: Unterdruckquelle
- 10: Unterdruckkanal
- 11: Einzelantrieb für Spinnrotor
- 12: Gestell
- 13: zentrale Steuerungseinrichtung
- 14: Einzelantrieb für die Speisevorrichtung
- 15: Zentralantrieb für die Spulvorrichtung
- 16: Zentralantrieb für die Auflösevorrichtung
- 17: Zwischengestell
- 18: Spulentransportband
- 19: Antrieb des Spulentransportbandes
- 20: Zwischenspeicher für Leerhülsen
- 21: Zentrale Versorgungseinrichtung für Leerhülsen
- 22: Spulwalzenwelle
- 23: Tangentialriemen für Ausflösewalzenantrieb
- 24: Vorratsbehälter
- 25: Umlenkrollen
- 26: Spulwalze
- 27: Changiervorrichtung
- 28: Fadenführerstange
- 29: Abzugsvorrichtung
- 30: zentraler Hülsenspeicher
- 31: Garn
- 32: Spule
- 33: Paraffiniereinrichtung
- 34: Teilung der Unterdruckkanäle
- 35: Arbeitsstellenteilung
- 36: Hülsentransportband
- 37: Leerhülsen
- 38: Übergabeeinrichtung
- 39: Antrieb des Hülsentransportbands

## Patentansprüche

1. Rotorspinnmaschine (1) mit einer Vielzahl von zwischen zwei stirnseitigen Enden (2) der Rotorspinnmaschine (1) auf zumindest einer Längsseite der Rotorspinnmaschine (1) nebeneinander angeordneten Arbeitsstellen (3), welche jeweils mehrere Arbeitsorgane zur Herstellung und Aufspulung eines Garns (31) aufweisen, wobei die Arbeitsorgane zumindest eine Speisevorrichtung (4), eine Auflösevorrichtung (5), einen Spinnrotor (6), sowie eine Spulvorrichtung (7) umfassen, und mit einer Absaugeinrichtung (8) zum Erzeugen eines Spinnunterdrucks an den Arbeitsstellen (3), wobei jede Arbeitsstelle (3) einen Einzelantrieb (11), insbesondere einen elektrischen Einzelantrieb (11), für den Spinnrotor (6), aufweist, **dadurch gekennzeichnet, dass** die Absaugeinrichtung (8) wenigstens zwei separate Unterdruckquellen (9) beinhaltet, wobei an jedem der beiden stirnseitigen Enden (2) der Rotorspinnmaschine (1) jeweils wenigstens eine Unterdruckquelle (9) angeordnet ist und wobei jede der Unterdruckquellen (9) an einen separaten, sich in Längsrichtung der Rotorspinnmaschine (1) nur über einen Teil der Arbeitsstellen (3) erstreckenden (2) Unterdruckkanal (10) angeschlossen ist, und dass die Auflösevorrichtungen (5) und die Spulvorrichtungen (4) der Arbeitsstellen (3) jeweils mittels eines elektrischen Einzelantriebs angetrieben sind.

2. Rotorspinnmaschine nach dem vorhergehenden Anspruch, **dadurch gekennzeichnet, dass** die Arbeitsstelle (3) eine berührungslose Lagerung, insbesondere eine Magnetlagerung, für den Spinnrotor (6) aufweist.

3. Rotorspinnmaschine nach einem der vorhergehenden Ansprüche, **dadurch gekennzeichnet, dass** die Unterdruckquellen (9) jeweils einen Ventilator und einen Antrieb für den Ventilator aufweisen und dass die Antriebe der Unterdruckquellen (9) durch eine zentrale Steuerungseinrichtung (13) der Rotorspinnmaschine (1) ansteuerbar sind.

4. Rotorspinnmaschine nach einem der vorhergehenden Ansprüche, **dadurch gekennzeichnet, dass** an jeden der Unterdruckkanäle (10) wenigstens 20%, vorzugsweise wenigstens 30%, besonders bevorzugt wenigstens 40 % der in Längsrichtung der Rotorspinnmaschine nebeneinander angeordneten Arbeitsstellen (3) zumindest einer Längsseite angeschlossen sind.

5. Rotorspinnmaschine nach einem der vorhergehenden Ansprüche, **dadurch gekennzeichnet, dass** die wenigstens zwei Unterdruckkanäle (10) in Längsrichtung der Rotorspinnmaschine (1) fluchtend hintereinander angeordnet sind.

6. Rotorspinnmaschine nach einem der vorhergehenden Ansprüche, **dadurch gekennzeichnet, dass** im Betrieb der Rotorspinnmaschine (1) in jedem der beiden Unterdruckkanäle (10) an einem der der Unterdruckquelle (9) gegenüberliegenden Ende (2) des jeweiligen Unterdruckkanals (10) noch ein Unterdruck in Höhe von 60 mbar erreicht wird.

7. Rotorspinnmaschine nach einem der vorhergehenden Ansprüche, **dadurch gekennzeichnet, dass** jede Arbeitsstelle (3) einen Einzelantrieb (14), insbesondere einen elektrischen Einzelantrieb (14), für die Speisevorrichtung (4) aufweist.

8. Rotorspinnmaschine nach einem der vorhergehenden Ansprüche, **dadurch gekennzeichnet, dass** die weiteren Arbeitsorgane der Arbeitsstellen (3) jeweils mittels eines elektrischen Einzelantriebs angetrieben sind.

9. Rotorspinnmaschine nach einem der vorhergehenden Ansprüche 1 - 7, **dadurch gekennzeichnet, dass** die weiteren Arbeitsorgane der Arbeitsstellen (3) jeweils mittels Zentralantrieben (15, 16) angetrieben sind, wobei vorzugsweise gleichartigen Arbeitsorganen jeder Längsseite ein eigener Zentralantrieb (15, 16) zugeordnet ist.

10. Rotorspinnmaschine nach dem vorhergehenden Anspruch, **dadurch gekennzeichnet, dass** gleichartige, zentral angetriebene Arbeitsorgane einer Längsseite wenigstens zwei Gruppen bilden und dass in jedem der beiden Gestelle (12) an den stirnseitigen Enden (2) ein Zentralantrieb (15, 16) zum Antrieb einer der beiden Gruppen angeordnet ist.

11. Rotorspinnmaschine nach einem der vorhergehenden Ansprüche, **dadurch gekennzeichnet, dass** die Rotorspinnmaschine (1) wenigstens zwei in Längsrichtung der Rotorspinnmaschine (1) hintereinander angeordnete Spulentransportbänder (18) aufweist.

12. Rotorspinnmaschine nach einem der vorhergehenden Ansprüche, **dadurch gekennzeichnet, dass** die Rotorspinnmaschine (1) einen Zwischenspeicher (20) für Leerhülsen (37) aufweist.

13. Rotorspinnmaschine nach einem der vorhergehenden Ansprüche, **dadurch gekennzeichnet, dass** die Rotorspinnmaschine (1) ein zwischen den beiden Gestellen (12) angeordnetes Zwischengestell (17) aufweist und dass in dem Zwischengestell (17) Umlenkrollen (25) zentraler Antriebe (16) und/oder Antriebe (19, 39) und/oder Speicher (20, 30) für zentrale Ver- und Entsorgungseinrichtungen (21, 18) angeordnet sind.

14. Rotorspinnmaschine nach einem der vorhergehenden Ansprüche, **dadurch gekennzeichnet, dass** die Rotorspinnmaschine (1) an jedem ihrer stirnseitigen Enden (2) einen zentralen Hülsenspeicher (30) für Leerhülsen (37) aufweist, wobei die zentralen Hülsenspeicher (30) vorzugsweise beabstandet von den beiden Gestellen (12) angeordnet sind.

15. Rotorspinnmaschine nach einem der vorhergehenden Ansprüche, **dadurch gekennzeichnet, dass** die Rotorspinnmaschine (1) an jedem ihrer beiden stirnseitigen Enden (2), insbesondere an den dort angeordneten Gestellen (12), einen Anschluss zur Energieeinspeisung und/oder einen Abluftaustritt aufweist.

## Claims

1. Rotor spinning machine (1) with a multiple number of work stations (3) arranged side by side between two front-side ends (2) of the rotor spinning machine (1) on at least one longitudinal side of the rotor spinning machine (1), each of which work stations (3) features a multiple number of work elements for the production and winding of a yarn (31), whereas the work elements comprise at least one feed device (4), one severing device (5), one spinning rotor (6) along with one winding device (7), and with a suction device (8) for producing a negative spinning pressure at the work stations (3), whereas each work station (3) features an individual drive (11), in particular a single electric drive (11), for the spinning rotor (6) **characterized in that** the suction device (8) includes at least two separate negative pressure sources (9), whereas at least one negative pressure source (9) is arranged on each of the two front ends (2) of the rotor spinning machine (1), and whereas each of the negative pressure sources (9) is connected to a separate negative pressure channel (10) that extends (2) in the longitudinal direction of the rotor spinning machine (1) only over a part of the work stations (3), and that the severing devices (5) and the winding devices (4), of the work stations (3) are driven by means of an individual electric drive.

2. Rotor spinning machine according to the preceding claim, **characterized in that** the work station (3) features a non-contact bearing, in particular a magnetic bearing, for the spinning rotor (6).

3. Rotor spinning machine according to one of the preceding claims, **characterized in that** each of the negative pressure sources (9) features a fan and a drive for the fan, and that the drives of the negative pressure sources (9) are controllable by a central control device (13) of the rotor spinning machine (1).

4. Rotor spinning machine according to one of the preceding claims, **characterized in that** at least 20%, preferably at least 30%, more preferably at least 40%, of the work stations (3) of at least one longitudinal side arranged side by side in the longitudinal direction of the rotor spinning machine are connected to each of the negative pressure channels (10).

5. Rotor spinning machine according to one of the preceding claims, **characterized in that** the at least two negative pressure channels (10) are arranged in an aligned manner one behind the other in the longitudinal direction of the rotor spinning machine (1).

6. Rotor spinning machine according to one of the preceding claims, **characterized in that**, in the operation of the rotor spinning machine (1), negative pressure in the amount of 60 mbar is achieved in each of the negative pressure channels (10) at one end (2) of the respective negative pressure channel (10) opposite to the negative pressure source (9).

7. Rotor spinning machine according to one of the preceding claims, **characterized in that** each work station features (3) an individual drive (14), in particular an individual electric drive (14), for the feed device (4).

8. Rotor spinning machine according to one of the preceding claims, **characterized in that** the additional work elements of the work stations (3) are driven by means of an individual electric drive.

9. Rotor spinning machine according to one of the preceding claims 1 to 7, **characterized in that** the additional work elements of the work stations (3) are each driven by means of central drives (15, 16), whereas, preferably, identical work elements on each longitudinal side are allocated with their own central drive (15, 16).

10. Rotor spinning machine according to one of the preceding claims, **characterized in that** identical, centrally driven work elements of a longitudinal side each form at least two groups, a central drive (15, 16) for driving one of the two groups is arranged in each of the two frames (12) on the front-side ends (2).

11. Rotor spinning machine according to one of the preceding claims, **characterized in that** the rotor spinning machine (1) features at least two package conveyor belts (18) arranged one behind the other in the longitudinal direction of the rotor spinning machine (1).

12. Rotor spinning machine according to one of the preceding claims, **characterized in that** the rotor spinning machine (1) features an intermediate storage unit (20) for empty sleeves (37).

13. Rotor spinning machine according to one of the preceding claims, **characterized in that** the rotor spinning machine (1) features an intermediate frame (17) arranged between the two frames (12), and that deflection rollers (25) of central drives (16) and/or drives (19, 39) and/or storage units (20, 30) for central supply and disposal devices (21, 18) are arranged in the intermediate frame (17).

14. Rotor spinning machine according to one of the preceding claims, **characterized in that** the rotor spinning machine (1) has a central sleeve storage unit (30) for empty sleeves (37) at each of its front-side ends (2), whereas the central sleeve storage unit (30) is preferably arranged at a distance from the two frames (12).

15. Rotor spinning machine according to one of the preceding claims, **characterized in that**, at each of its two front-side ends (2), in particular on the frames (12) arranged therein, the rotor spinning machine (1) has a connection for the feed of energy and/or an exhaust air outlet.

## Revendications

1. Machine de filature à rotor (1) avec une pluralité de postes de travail (3) disposés les uns à côté des autres entre deux extrémités frontales (2) de la machine de filature à rotor (1) sur au moins un côté longitudinal de la machine de filature à rotor (1), qui comportent chacun plusieurs organes de travail pour produire et enrouler un fil (31), dans laquelle les organes de travail comportent au moins un dispositif d'alimentation (4), un dispositif d'ouvraison (5), un rotor de filage (6), ainsi qu'un dispositif de bobinage (7), et avec un dispositif d'aspiration (8) pour générer une dépression de filage aux postes de travail (3), dans laquelle chaque poste de travail (3) présente un entraînement individuel (11), en particulier un entraînement individuel électrique (11), pour le rotor de filage (6), **caractérisée en ce que** le dispositif d'aspiration (8) comprend au moins deux sources de vide (9) séparées, au moins une source de vide (9) étant disposée sur chacune des deux extrémités frontales (2) de la machine de filature à rotor (1), chacune des sources de vide (9) étant reliée à un canal de vide (10) séparé ne s'étendant (2) dans la direction longitudinale de la machine de filature à rotor (1) que sur une partie des postes de travail (3), et **en ce que** les dispositifs d'ouvraison (5) et les dispositifs de bobinage (4) des postes de travail (3) sont chacun entraînés au moyen d'un entraînement individuel électrique.

2. Machine de filature à rotor selon la revendication précédente, **caractérisée en ce que** le poste de travail (3) présente un palier sans contact, en particulier un palier magnétique, pour le rotor de filage (6).

3. Machine de filature à rotor selon l'une quelconque des revendications précédentes, **caractérisée en ce que** les sources de vide (9) présentent chacune un ventilateur et un entraînement pour le ventilateur, et **en ce que** les entraînements des sources de vide (9) peuvent être commandés par un dispositif de commande central (13) de la machine de filature à rotor (1).

4. Machine de filature à rotor selon l'une quelconque des revendications précédentes, **caractérisée en ce qu'**au moins 20 %, de préférence au moins 30 %, de manière particulièrement préférée au moins 40 % des postes de travail (3) d'au moins un côté longitudinal, qui sont disposées les uns à côté des autres dans la direction longitudinale de la machine de filature à rotor, sont reliées à chacun des canaux de vide (10).

5. Machine de filature à rotor selon l'une quelconque des revendications précédentes, **caractérisée en ce que** les, au moins deux, canaux de vide (10) sont disposés en alignement l'un derrière l'autre dans la direction longitudinale de la machine de filature à rotor (1).

6. Machine de filature à rotor selon l'une quelconque des revendications précédentes, **caractérisée en ce que**, pendant le fonctionnement de la machine de filature à rotor (1), un vide de 60 mbar est encore réalisé dans chacun des deux canaux de vide (10) à une extrémité (2) du canal de vide (10) respectif faisant face à la source de vide (9).

7. Machine de filature à rotor selon l'une quelconque des revendications précédentes, **caractérisée en ce que** chaque poste de travail (3) présente un entraînement individuel (14), en particulier un entraînement individuel électrique (14), pour le dispositif d'alimentation (4).

8. Machine de filature à rotor selon l'une quelconque des revendications précédentes, **caractérisée en ce que** les autres organes de travail des postes de travail (3) sont chacun entraînés au moyen d'un entraînement individuel électrique.

9. Machine de filature à rotor selon l'une quelconque des revendications 1 à 7 précédentes, **caractérisée en ce que** les autres organes de travail des postes de travail (3) sont chacun entraînés au moyen d'entraînements centraux (15, 16), un entraînement central (15, 16) spécifique étant de préférence attribué à des organes de travail de même type de chaque côté longitudinal.

10. Machine de filature à rotor selon la revendication précédente, **caractérisée en ce que** des organes de travail similaires, à entraînement central, d'un côté longitudinal forment au moins deux groupes, et **en ce qu'**un entraînement central (15, 16) pour l'entraînement de l'un des deux groupes est disposé dans chacun des deux bâtis (12) aux extrémités frontales (2).

11. Machine de filature à rotor selon l'une quelconque des revendications précédentes, **caractérisée en ce que** la machine de filature à rotor (1) présente au moins deux bandes de transport (18) de bobines disposées l'une derrière l'autre dans la direction longitudinale de la machine de filature à rotor (1).

12. Machine de filature à rotor selon l'une quelconque des revendications précédentes, **caractérisée en ce que** la machine de filature à rotor (1) présente un magasin intermédiaire (20) pour les bobinots vides (37).

13. Machine de filature à rotor selon l'une quelconque des revendications précédentes, **caractérisée en ce que** la machine de filature à rotor (1) présente un bâti intermédiaire (17) disposé entre les deux bâtis (12), et **en ce que** des poulies de renvoi (25) d'entraînements centraux (16) et/ou des entraînements (19, 39) et/ou des magasins (20, 30) pour des dispositifs centraux d'alimentation et d'évacuation (21, 18) sont disposés dans le bâti intermédiaire (17).

14. Machine de filature à rotor selon l'une quelconque des revendications précédentes, **caractérisée en ce que** la machine de filature à rotor (1) présente à chacune de ses extrémités frontale (2) un magasin central (30) de bobinots pour des bobinots vides (37), les magasin central (30) de bobinots étant de préférence disposés à distance des deux bâtis (12).

15. Machine de filature à rotor selon l'une quelconque des revendications précédentes, **caractérisée en ce que** la machine de filature à rotor (1) présente à chacune de ses extrémités frontale (2), en particulier aux bâtis (12) qui y sont disposés, un raccord pour l'injection d'énergie et/ou une sortie d'air extrait.
